# EUROPÄISCHE PATENTSCHRIFT

(11) **EP 1 602 179 B1**
(45) Veröffentlichungstag und Bekanntmachung des Hinweises auf die Patenterteilung: **27.06.2007**
(21) Anmeldenummer: 04715846.4
(22) Anmeldetag: 29.02.2004
(51) Int. Cl.: H04B 1/48, H04B 1/18

(54) **Schaltungsanordnung zum Betrieb von Sende- und Empfangsgeräten an einer Antenne**
CIircuit arrangement for operating transceivers on an antenna
Ensemble circuit servant à faire fonctionner des appareils d'emission et de récéption sur une antenne

(30) Priorität: 11.03.2003 DE 10311682
(43) Veröffentlichungstag der Anmeldung: 07.12.2005
(73) Patentinhaber: Funkwerk Dabendorf GmbH, 15806 Dabendorf (DE)
(72) Erfinder: NAST, Helmut, 12557 Berlin (DE); JACOBI, Raimo, 12557 Berlin (DE); HEYDER, Frank, 12623 Berlin (DE); KARLAPP, Bernd, 15838 Am Mellensee (DE)
(74) Vertreter: Schubert, Klemens
(86) Internationale Anmeldenummer: PCT/DE2004/000418
(87) Internationale Veröffentlichungsnummer: WO 2004/082162

(56) Entgegenhaltungen:
- EP-A- 1 039 650
- DE-A- 10 034 387
- DE-A- 10 114 531
- US-A- 5 032 804
- DATABASE WPI Section EI, Week 200335 Derwent Publications Ltd., London, GB; Class W02, AN 2003-369194 XP002289923 LIM D S: "Apparatus and method for sharing feeder of BTSs" & KR 2003 004 533 A (CYLUX TECHNOLOGIES CO LTD) 15. Januar 2003 (2003-01-15)

## Beschreibung

Die Erfindung betrifft eine Schaltungsanordnung zum gleichzeitigen Betrieb mehrerer Mobilfunkgeräte an einer gemeinsamen, sowohl den Empfang eingehender, als auch der Abstrahlung gesendeter Signale dienenden Antenne. Die Erfindung bezieht sich in diesem Zusammenhang auf eine Schaltungsanordnung, bei welcher zwischen der Antenne und jedem Mobilfunkgerät jeweils eine Schaltungseinheit zur Kompensation (Kompensationseinheit) der in einem die Antenne mit dem entsprechenden Mobilfunkgerät verbindenden HF-Kabel auftretenden Dämpfung angeordnet ist.

In Kraftfahrzeugen werden beispielsweise Mobilfunkgeräte über eine Freisprechanlage und ein HF-Kabel mit einer externen Antenne am Fahrzeug verbunden. Dies dient zum einem dazu, die von einem solchen Mobilfunkgerät beim Sendebetrieb ausgehende Strahlung vom Fahrer fernzuhalten. Andererseits wird durch die Verwendung einer externen Antenne im Hinblick auf das als Faradayscher Käfig wirkende Kraftfahrzeug ein verbesserter Empfang eingehender Signale erreicht. Allerdings treten in dem das Mobilfunkgerät bzw. die Freisprecheinrichtung mit der externen Antenne verbindenden HF-Kabel unerwünschte Dämpfungen des Signals auf. Aufgrund der eng tolerierten Leistungsspezifikationen im Mobilfunk können hierdurch Probleme im Sende- und/oder Empfangsbetrieb auftreten. Um dem zu begegnen, ist es bekannt, zwischen dem Mobilfunkgerät und der Antenne Einheiten zur Kompensation der auftretenden Dämpfung, so genannte als Kompensationseinheiten wirkende Compenser, anzuordnen. Es handelt sich hierbei um spezielle Verstärkereinheiten, welche über mindestens einen Sendezweig mit einem Leistungsverstärker und über mindestens einen Empfangszweig mit einem Empfangsverstärker verfügen. Vorzugsweise auf der Grundlage der Detektion eines von einem angeschlossenen Mobilfunkgerät ausgehenden Sendesignals werden durch entsprechende Schaltungskomponenten wechselweise der Sende- bzw. Empfangszweig eines solchen Compensers in den Signalweg geschaltet. Gegebenenfalls sind derartige Geräte auch mehrbandfähig. Sie verfügen dann über mehrere Sende- und Empfangszweige, wobei Sende- bzw. Empfangssignale entsprechend ihrer Zugehörigkeit zu einem bestimmten Frequenzband mittels sogenannter Diplexfilter dem für das entsprechende Frequenzband ausgelegten Sende- bzw. Empfangszweig zugeleitet werden. Eine solche Schaltungsanordnung zur Dämpfungskompensation wird beispielsweise durch DE 199 13 064 C1 (EP 1 039 650 A2) offenbart.
Im Zusammenhang mit dem zunehmenden Ausbau der Kommunikationsinfrastrukturen, dem ständig steigenden Informationsbedarf und der zunehmenden Nutzung von Telematikdiensten zeichnet sich eine Entwicklung ab, nach der beispielsweise in Kraftfahrzeugen nicht nur dual- bzw. mehrbandfähige Mobilfunkgeräte sondern unter Umständen auch mehrere Mobilfunkgeräte gleichzeitig in Betrieb sind. Dabei ist es jedoch selbstverständlich nicht wünschenswert, für eine solche Mehrzahl von Mobilfunkgeräten jeweils zusätzliche externe Antennen am Kraftfahrzeug vorzusehen. Daher werden Sende- und Empfangszweige mehrerer derartiger Geräte bzw. ihrer zugehörigen Peripheriegeräte (beispielsweise Freisprecheinrichtung) an einer gemeinsamen Antenne zusammengeführt. Soweit diesseits bekannt, geschieht dies nach dem Stand der Technik mittels so genannter passiver Combiner und Splitter, an denen die Sendesignale der Geräte zusammengeführt bzw. die für sie bestimmten Empfangssignale verteilt werden. Eine die Verwendung entsprechende Combiner betreffende Schaltungsanordnung ist beispielweise aus der US 8,082,804 bekannt. Sofern es sich bei den Mobilfunkgeräten um Geräte handelt, die im gleichen Frequenzband arbeiten, geschieht beispielsweise die Zusammenführung der Sendesignale zur gemeinsamen Antenne über eine sternförmige Struktur aus so genannten λ/4-Leitungen. Es handelt sich hierbei um Leitungen, die eine definierte Signalverzögerung und somit Phasenverschiebung eines sie passierenden Signals hervorrufen und die so zusammengeschaltet werden, dass das unerwünschte Übersprechen des Sendesignals von einem Sendezweig eines Gerätes auf den eines anderen durch eine Wellenauslöschung weitgehend verhindert wird. Im Hinblick auf das Zusammenführen beispielsweise zweier GSM-Geräte erreicht man so, zur Verhinderung einer gegenseitigen Beeinflussung der Geräte zwischen diesen eine Dämpfung von etwa 30 dB. Dies ist jedoch im Einzelfalle im Hinblick auf den Sendebetrieb noch nicht befriedigend. Zudem tritt an der dargestellten Struktur im Hinblick auf das Nutzsignal ein Verlust von mindestens 3 dB auf. Das heißt von der ursprünglich abgestrahlten Leistung von 2 W eines GSM 900-Gerätes gelangt maximal 1 W Sendeleistung an die Antenne. Nachteilig ist weiterhin, dass eine Struktur mit λ/4-Leitungen für den Betrieb so genannter Dualbandhandys, die wahlweise im GSM 900-Band oder im GSM 1800-Band arbeiten, nicht geeignet ist, weil eine sich auf die Wellenlänge des Signals beziehende λ/4-Leitung des GSM 900-Bandes bezogen auf das GSM 1800-Band und dessen kürzere Wellenlänge als λ/2-Leitung wirkt. Die auf der Auslöschung von Wellen beruhende Dämpfung zwischen den Signalzweigen zweier auf eine solche Struktur geführter Mobilfunkgeräte ist somit mittels einer solchen Anordnung nicht gleichzeitig für den GSM 900 und den GSM 1800-Betrieb zu erreichen.

Aus der KR 2003 004 533 ist eine Schaltungsanordnung zum gleichzeitigen Betrieb mehrerer Sende- und Empfangseinheiten - genauer gesagt mehrerer BTS (Basisstationen) eines Mobilfunknetzes bekannt. Die mit der Schaltungsanordnung nach der Druckschrift betreibbaren BTS sind jedoch nicht beliebig variierbar beziehungsweise kombinierbar. Vielmehr wird durch jede BTS eine gewisse Zahl möglicher Frequenzkanäle innerhalb des GSM-Frequenzbandes abgedeckt, wobei jedoch keine Überlappung zwischen den Frequenzkanälen einer BTS und denen der jeweils anderen BTS besteht. Zudem bilden die von jeweils einer BTS bedienbaren Frequenzkanäle stets einen zusammenhängenden Frequenzbereich aus. Die Schaltungsanordnung ist jedoch nicht für den gleichzeitigen Betrieb mehrerer Mobilfunkgeräte geeignet, da es eine entsprechende Schaltungsanordnung ermöglichen muss, dass mehrere Geräte (nicht vorhersehbar) gleichzeitig, auch innerhalb gleicher Frequenzbereiche mit nicht benachbarten Frequenzkanälen oder aber auch in unterschiedlichen Frequenzbereichen, senden und/oder empfangen können.

Aufgabe der Erfindung ist es, eine Schaltungsanordnung anzugeben, die es ermöglicht, mehrere Mobilfunkgeräte an einer gemeinsamen Antenne weitgehend ohne Verluste im Hinblick auf die Sende- und Empfangsleistung zu betreiben. Zudem soll eine gegenseitige Beeinflussung der Signalzweige mehrerer Geräte vermieden werden. In einer bevorzugten Auslegung soll die Schaltungsanordnung außerdem den Betrieb mehrerer in unterschiedlichen Frequenzbändern arbeitender Geräte ermöglichen.

Die Aufgabe wird durch eine Schaltungsanordnung mit den Merkmalen des Hauptanspruchs gelöst. Vorteilhafte Aus- bzw. Weiterbildungen der Erfindung sind durch die Unteransprüche gegeben.
Bei der vorgeschtagenen Schaltungsanordnung sind zum gleichzeitigen Betrieb mehrerer Mobilfunkgeräte an einer gemeinsamen Antenne in an sich bekannter Weise Schaltungseinheiten zur Kompensation (Kompensationseinheiten - Compenser) der in dem die Antenne mit dem jeweiligen Mobilfunkgerät verbindenden HF-Kabel auftretenden Dämpfung angeordnet. Die Compenser verfügen über mindestens einen Sendezweig mit einem Leistungsverstärker und über mindestens einen Empfangszweig mit einem Empfangsverstärker, die in Abhängigkeit davon, ob das Mobilfunkgerät Signale empfängt oder sendet, wechselweise in den Signalweg geschaltet werden. Geräteseitig geschieht dies, in ebenfalls bekannter Weise, mittels einer von eine Selektionsschaltung oder einer ein Sendesignal des betreffenden Mobilfunkgerätes detektierenden Detektorschaltung geschalteten Duplexers oder HF-Umschalters. Erfindungsgemäß werden jedoch alle Sende- und Empfangszweige der Kompensationseinheiten bzw. Compenser über eine spezielle Zusammenschaltungseinheit mit der Antenne verbunden, in welcher, in Signalflussrichtung betrachtet, alle einem Frequenzband zuzuordnenden an den Ausgängen von Sendeverstärkern der Compenser anstehenden Sendesignale über eine oder mehrere passive Kombinierer (dem Englischen entlehnt, im Weiteren auch als passive Combiner bezeichnet) auf eine Duplexweiche zusammengeführt sowie von dieser über gegebenenfalls weitere Filtereinheiten auf die Antenne geführt werden. Die an der Antenne eingehenden Empfangssignale, welche den hinsichtlich des Frequenzbandes zugehörigen Empfangszweigen der Compenser zuzuführen sind, werden über die gegebenenfalls vorgesehenen weiteren Filtereinheiten, die Duplexweiche und durch diese vom Signalweg der Sendesignale getrennt über einen Verstärker und einen Splitter auf die Eingänge der Empfangsverstärker geführt. In Bezug auf den Sendezweig ist dabei zwischen dem Ausgang eines Sendeverstärkers und einem mit ihm unmittelbar verbundenen passiven Combiner der Zusammenschaltungseinheit ein nur für die Sendesignale dieses entsprechenden Sendeverstärkers passierbares Sperrelement (Isolator) angeordnet. Außerdem ist die Ausgangsleistung aller Sendeverstärker der Compenser entsprechend der an den ihnen nachgeordneten passiven Combinern auftretenden Dämpfung des Sendesignals erhöht. Durch die gesonderte Kompensation der in den passiven Combinern auftretenden Dämpfung in den jeweiligen Sendeverstärkern der Kompensationseinheiten und durch den Einsatz der Isolatoren werden Intermodulationen zwischen den Signalzweigen der einzelnen Kompensationseinheiten, also das Beaufschlagen der Ausgänge der Leistungs- bzw. Sendeverstärker mit den verstärkten Sendesignalen eines anderen Sendezweiges, sicher verhindert.

Im Hinblick auf eingehende Empfangssignale ist dies jedoch nicht erforderlich. Daher wird die Dämpfung, welche an den das Empfangssignal passiv auf die Empfangsverstärker der Compenser verteilenden Splitter auftritt, durch einen gemeinsamen für alle Empfangszweige innerhalb eines Frequenzbandes wirksamen Verstärker der Zusammenschaltungseinheit kompensiert, welche dem Splitter vorgeschaltet ist. Durch den geschilderten Aufbau ist die Schaltungsanordnung duplexfähig, und zwar unabhängig davon, ob dies für die daran betriebenen Mobilfunkgeräte selbst auch zutrifft. Es ist hierdurch möglich, dass ein oder mehrere Mobilfunkgeräte senden, während gleichzeitig andere Mobilfunkgeräte über dieselbe Schaltungsanordnung Signale empfangen.
Entsprechend einer bevorzugten Weiterbildung der erfindungsgemäßen Schaltungsanordnung weisen die Compenser mehrere, geräteseitig, also zur Seite der Mobilfunkgeräte hin, über einen Diplexer verschaltete Sende- und Empfangszweige zur Verstärkung von Signalen unterschiedlicher Frequenzbänder auf. Dabei ist die Zusammenschaltungseinheit in entsprechender Weise ausgebildet, wobei die von den Compensern verstärkten Sendesignale und die ihnen zugeführten Empfangssignale entsprechend ihrem Frequenzband über unterschiedliche Frequenzzweige der Zusammenschaltungseinheit geführt werden. Bei mindestens einer, der bzw. den Duplexweichen der Zusammenschaltungseinheit in Richtung der Antenne nachgeordneten Filtereinheiten handelt es sich gemäß dieser Ausgestaltung um eine Frequenzbandweiche, einen so genannten Diplexer. Mittels des Diplexers werden über unterschiedliche Frequenzzweige der Zusammenschaltungseinheit geführte Sendesignale vor ihrer Weiterleitung zur Antenne zusammengeführt und, in analoger Weise, eingehende Empfangssignale voneinander getrennt. Zudem sind die bei der grundsätzlichen Darstellung der erfindungsgemäßen Schaltungsanordnung genannten Komponenten der Zusammenschaltungseinheit bei dieser Ausführungsform für jeden Frequenzzweig vorhanden. Demnach besteht jeder Frequenzzweig der Zusammenschaltungseinheit zumindest aus einem oder mehreren passiven Combinern, einer Duplexweiche, einem Splitter sowie einem dem Splitter vorgeschalteten Verstärker. Grundsätzlich ist es auch denkbar den Diplexer durch eine extern (beispielsweise durch entsprechend ausgebildete, d.h. umschaltbare Mobilfunkgeräte) gesteuerte Umschalteinheit zu ersetzen. Allerdings entsteht hierdurch die Einschränkung dass zwar grundsätzlich in unterschiedlichen Frequenzbändern arbeitende Mobilfunkgeräte mit der Schaltungsanordnung betrieben werden können, jedoch gleichzeitig jeweils immer nur in einem Frequenzband arbeitende Geräte.
Gemäß einer praxisgerechten Ausführungsform weist die Zusammenschaltungseinheit zwei Frequenzzweige auf, wobei diese vorzugsweise so ausgelegt sind, dass die Schaltungsanordnung für den Betrieb mehrerer, in Netzen mit unterschiedlichen Frequenzbändern zu verwendender Mobilfunkgeräte geeignet ist. Im Hinblick auf den heute für den Mobilfunk überwiegend genutzten GSM-Standard sind somit mittels der Schaltungsanordnung beispielsweise Mobilfunkgeräte (Handys oder dergleichen) über eine Antenne zu betreiben, die wahlweise im GSM 900-Netz und/oder im GSM 1800-Netz arbeiten.
Vorzugsweise sind die Schaltungsanordnung und gegebenenfalls auch deren vorstehend genannte Einheiten, also insbesondere die Compenser und die Zusammenschaltungseinheit, modular aufgebaut. Bei einer solchen modularen Ausführung sind die Isolatoren zwischen den Ausgängen der Leistungsverstärker und den passiven Combinern bevorzugt in das die Zusammenschaltungseinheit realisierende Modul integriert, wobei jedem Eingang eines passiven Combiners für das Sendesignal ein Isolator vorgeschaltet ist.
Weiterhin ist eine vorteilhafte Ausführungsform der Schaltungsanordnung dadurch gegeben, dass die Leistungsverstärker der Kompensationseinheiten mittels am Markt erhältlicher Verstärkergrundmodule realisiert werden. Im Hinblick auf die Erfordernisse des GSM-Standards mit einer Sendeleistung von 2 W im GSM 900-Netz bzw. 1 W im GSM 1800-Netz und das Erfordernis einer Erhöhung der Ausgangsleistung zur Kompensation der in dem oder den passiven Combinern auftretenden Dämpfung kommt insoweit die Verwendung von Grundmodulen mit einer Ausgangsleistung von 4 W bzw. 2 W in Betracht. Sofern aufgrund der maximal zum Betrieb an der Schaltungsanordnung vorgesehenen Zahl von Mobilfunkgeräten und der damit zusammenhängenden konkreten Ausbildung der Zusammenschaltungseinheit höhere Ausgangsleistungen für die Sendeverstärker erforderlich sind, können entsprechende Ausgangsleistungen durch geeignete Zusammenschaltung solcher Grundmodule erreicht werden. In diesem Falle werden die Sendeverstärker für ein Frequenzband, gemäß einer möglichen Ausgestaltung der Erfindung, jeweils innerhalb einer Kompensationseinheit an den Aus- und Eingängen durch so genannte 90°-Hybride zusammengeschaltet.
Im Hinblick auf die Zahl der mittels der Schaltungsanordnung maximal an einer Antenne zu betreibenden Mobilfunkgeräte ist gemäß einer praxisgerechten Ausführungsform der Erfindung eine in bestimmter Weise gestaffelte Erhöhung der Zahl hierzu erforderlicher Komponenten, insbesondere der Zahl der passiven Combiner vorgesehen. Die Schaltungsanordnung ist danach stets für den gleichzeitigen Betrieb von einer hinsichtlich ihre Anzahl einer Potenz (Kombinationspotenz) von 2 entsprechenden Mobilfunkgeräten (Kombinationsmaximum) ausgelegt. Dies meint, die Schaltungsanordnung ausgelegt. ist für den gleichzeitigen Betrieb von 2, 4, 8 u.s.w. Mobilfunkgeräten ausgelegt. Sofern also beispielsweise 6 Mobilfunkgeräte mittels einer sich an einer derartigen Staffelung orientierenden Ausbildungsform der erfindungsgemäßen Schaltungsanordnung betrieben werden sollen, wäre für diesen Zweck eine den Betrieb von maximal 8 Mobilfunkgeräten ermöglichende Ausführungsform zu verwenden. Jeder Frequenzzweig der Zusammenschaltungseinheit in dem Signalweg für die Sendesignale weist dabei eine gegenüber dem Kombinationsmaximum um 1 verminderte Anzahl von passiven Combinern (also für den Betrieb von maximal 8 Mobilfunkgeräten = 7 passive Combiner) auf, die in einer der Kombinationspotenz entsprechenden Zahl von Kaskadenstufen (also, wiederum bezogen auf das Beispiel von maximal 8 zu betreibende Mobilfunkgeräten, 3 Kaskadenstufen - 2³=8) miteinander verschaltet sind, während der Splitter des zugehörigen Signalweges für die Empfangssignale diesen in eine dem Kombinationsmaximum entsprechende Anzahl von Signalwegen aufteilt. Aufgrund der höheren Anzahl von passiven Combinern (näheres dazu und zur Kaskadierung im Ausführungsbeispiel) erhöht sich zwangsläufig die an ihnen auftretende Dämpfung der Sendeleistung eines Mobilfunkgerätes Folglich muss die Ausgangsleistung der Leistungsverstärker der Compenser adäquat erhöht werden, nämlich vorzugsweise so, dass je Combiner- bzw. Kaskadenstufe die Ausgangsleistung jedes Leistungsverstärkers einer Kompensationseinheit bezogen auf die Leistung eines über den jeweiligen Leistungsverstärker geführten Sendesignals eines Mobilfunkgerätes verdoppelt wird.
Bei einer weiteren, wie schon angesprochen gegebenenfalls zwischen einer Duplexweiche - oder im Falle einer mehrbandfähigen Ausbildung zwischen dem Diplexer-der Zusammenschaltungseinheit und der Antenne angeordneten Filtereinheit, handelt es sich beispielsweise um ein Oberwellenfilter. Vorzugsweise ist außerdem zwischen einer Duplexweiche bzw. einem Diplexer und der Antenne eine die übrigen Schaltungsteile vor elektrostatischen Entladungen schützende ESD-Schutzeinheit angeordnet. Im Hinblick auf einen modularen Aufbau der erfindungsgemäßen Schaltungsanordnung sind das Oberflächenfilter und/oder die ESD-Schutzeinheit vorzugsweise antennenseitige Bestandteile eines die Zusammenschaltungseinheit ausbildenden Moduls.

Die Erfindung soll nachfolgend anhand von Ausführungsbeispielen nochmals näher erläutert werden. In den zugehörigen Zeichnungen zeigen
- Fig. 1:: Ein grobes Blockschaltbild, der erfindungsgemäßen Schaltungsanordnung
- Fig. 2:: Ein etwas detaillierteres Blockschaltbild der Schaltungsanordnung nach Fig. 1
- Fig. 3:: Einen Ausschnitt der Schaltungsanordnung gemäß Fig. 2 in einer Ausführung für den Betrieb von vier Mobilfunkgeräten
- Fig. 4:: Das Blockschaltbild entsprechend Fig. 1 in einer Ausführung für den Betrieb von vier Mobilfunkgeräten.
- Fig. 5:: Die Zusammenschaltung der Sendezweige zweier Grundmodule für Compenser zum Erhalt einer erhöhten Gesamtsendeleistung
- Fig. 6:: Die Zusammenführung von Signalwegen mittels λ/4-Leitungen nach dem Stand der Technik.

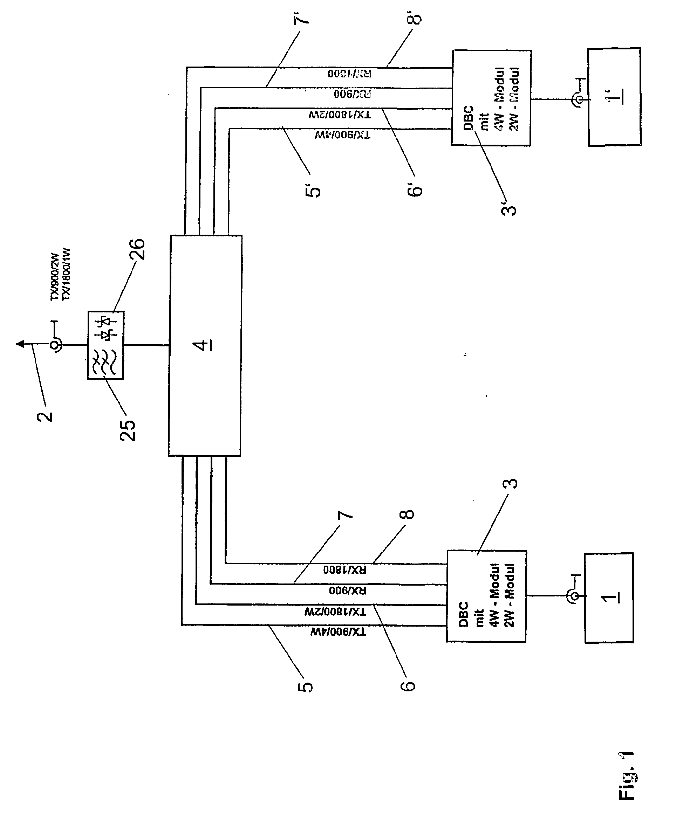

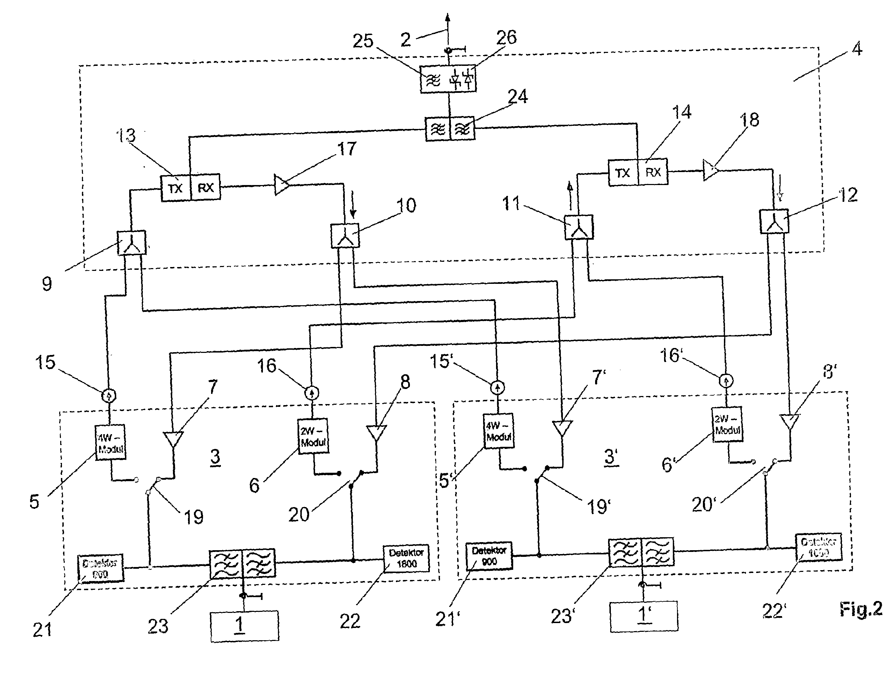

Die Fig. 1 zeigt ein grobes Blockschaltbild der erfindungsgemäßen Schaltungsanordnung. Es handelt sich hierbei um ein Ausführungsbeispiel für den gemeinsamen Betrieb von 2 Mobilfunkgeräten 1,1' an einer Antenne 2. Zunächst ist wie aus dem Stand der Technik bekannt, zwischen jedem Mobilfunkgerät 1, 1' und der Antenne 2 eine Kompensationseinheit 3, 3' (Compenser) für die Kompensation der in dem das Mobilfunkgerät 1, 1' mit der Antenne 2 verbindenden HF-Kabel auftretenden Dämpfung vorgesehen. Gemäß dem dargestellten Beispiel handelt es sich hierbei um einen dualbandfähigen Compenser 3, 3', der einen Betrieb sowohl im GSM 900- als auch im GSM 1800-Frequenzband ermöglicht. Alle Sende- und Empfangszweige 5, 5' 6, 6', 7, 7', 8, 8' beider Compenser 3, 3' sind auf eine Zusammenschaltungseinheit 4 geführt, deren nähere Erläuterung anhand der Fig. 2 erfolgen soll.

Die Fig. 2 zeigt die Schaltungsanordnung nach der Fig. 1 ebenfalls als Blockschaltbild, jedoch in einer etwas detaillierten Darstellung. In der Darstellung sind auch die Komponenten der Compenser 3, 3' etwas detaillierter angegeben. Es ist erkennbar, dass es sich bei beiden Compensern 3, 3' um so genannte Dualbandcompenser handelt, welche den Betrieb eines Dualbandhandys oder wahlweise den Betrieb eines GSM 900- bzw. GSM 1800-Handys 1, 1' ermöglichen. Hierzu werden die Sende- und Empfangssignale geräteseitig über einen Diplexer 23, 23' geführt. Im Sendebetrieb stellt der Diplexer 23, 23' sicher, dass ein GSM 900-Sendesignal auf das 4-Watt- Verstärkermodul des Compensers 3, 3' und GSM 1800-Signal auf dessen 2-Watt Modul geführt wird. In den Zuleitungen der Verstärkermodule der Compenser 3, 3' sind jeweils HF-Umschalter 19, 19', 20, 20' angeordnet. Diese werden mittels der Detektoren 21, 21',22, 22' beim Auftreten eines Sendesignals auf den Sendezweig 5, 5', 6, 6' umgeschaltet. In der wiedergegebenen Darstellung sind alle HF-Umschalter 19, 19', 20, 20' der Compenser 3, 3' so geschaltet, dass deren Empfangszweige 7, 7', 8, 8' in den Signalweg geschaltet sind. Dies entspricht dem Grundzustand der Schaltungsanordnung, welche somit bereit ist für den Empfang von eingehenden Signalen, unabhängig davon ob es sich hierbei um GSM 900 oder GSM 1800-Signale handelt. Das Umschalten auf den Sendezweig 5, 5', 6, 6' erfolgt, wie bereits dargestellt, jeweils immer nur bei Detektion eines Sendesignals. Sobald das Sendesignal ausbleibt, geht der zugehörige HF-Umschalter19, 19', 20, 20' wieder in den Grundzustand über. Die jeweiligen Sendezweige 5, 5', 6, 6' beider Compenser 3, 3', nämlich die Sendezweige 5, 5' für das GSM 900-Frequenzband einerseits und die Sendezweige 6, 6' für das GSM 1800-Frequenzband andererseits, sind ausgangsseitig jeweils auf einen passiven Combiner 9, 11 geführt. An diesem erfolgt wie aus dem Stand der Technik bekannt, lediglich das Zusammenführen der Signalzweige. Um die hierbei auftretenden Dämpfung zu kompensieren sind die Ausgangsleistungen der Leistungsverstärker in den Sendezweigen 5, 5', 6, 6' der Compenser 3, 3', wie zu erkennen, entsprechend erhöht. Die Ausgangsleistung des Sendeverstärkers für das GSM 900-Band beträgt demzufolge 4 W anstelle der eigentlich benötigten 2 W und die des GSM 1800-Zweiges 2 W anstelle der benötigten 1W. Um ein Übersprechen zwischen den Sendezweigen 5, 5', 6, 6' des gleichen Frequenzbandes beider Compenser 3, 3' zu verhindern, ist zwischen dem Ausgang eines Sendeverstärkers und dem. jeweils mit ihm verbundenen passiven Combiner 9, 11 ein Sperrelement, nämlich ein spezielles Sperrfilter beziehungsweise ein so genannter Isolator 15 15', 16, 16' angeordnet. Dieser kann entsprechend einer bereits erwähnten Ausbildungsform der Erfindung Bestandteil der Zusammenschaltungseinheit 4 oder, wie im gezeigten Beispiel, jeweils unmittelbar hinter dem Ausgang eines Leistungsverstärkers angeordnet sein. Die Sendesignale werden am passiven Combiner 9, 11 zusammengeführt und von diesem über die Duplexweiche 13, 14, welche die Duplexfähigkeit der Anordnung ermöglicht, weitere Filtereinheiten 24 25 auf die Antenne 2 geführt. In umgekehrter Richtung werden an der Antenne 2 eingehende Empfangssignale über die Filtereinheiten 25, 24 auf die Duplexweiche 13, 14 geführt und von dieser über einen Splitter 10, 12 auf die Empfangsverstärker der Compenser 3, 3' verteilt. Ein eingehendes Empfangssignal liegt somit, sofern nicht eines der beiden in der Zeichnung angedeuteten Mobilfunkgeräte (Handys) 1 oder 1' im Sendebetrieb ist unabhängig von seinem Frequenzband an beiden zur Verbindung mit den Mobilfunkgeräten 1, 1' vorgesehenen HF-Steckverbindern bzw. -Connectoren der Schaltungsanordnung an. Selbstverständlich wird auch durch den Splitter 10, 12 im Empfangsweg eine Dämpfung des Signals verursacht. Diese kann aber anders als beim Sendeweg 5,5', 6, 6' durch einen bezogen auf beide Compenser 3, 3' gemeinsamen Verstärker 17, 18 kompensiert werden. Dieser ist, wie in der Zeichnung erkennbar, dem jeweiligen Splitter 10, 12 vorgeschaltet.

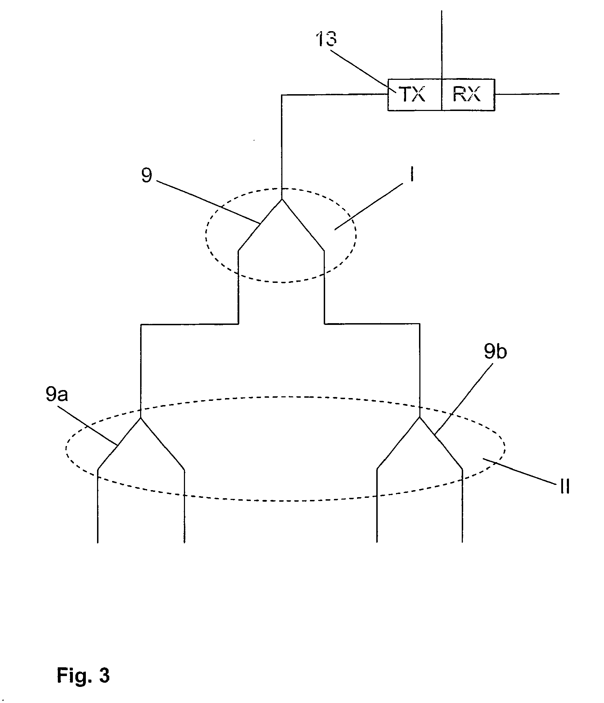

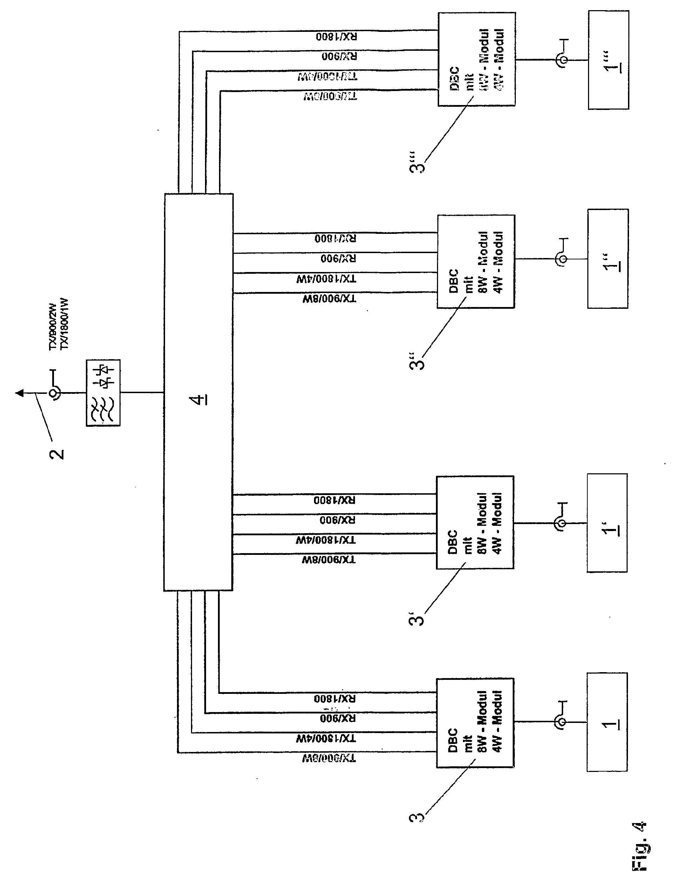

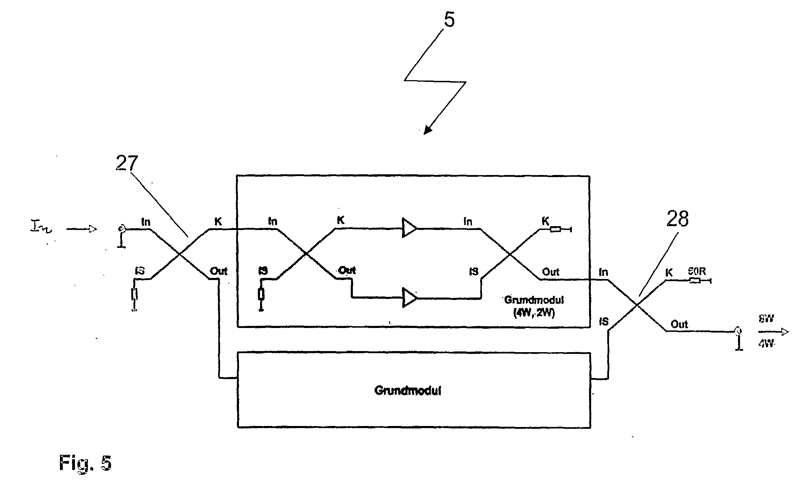

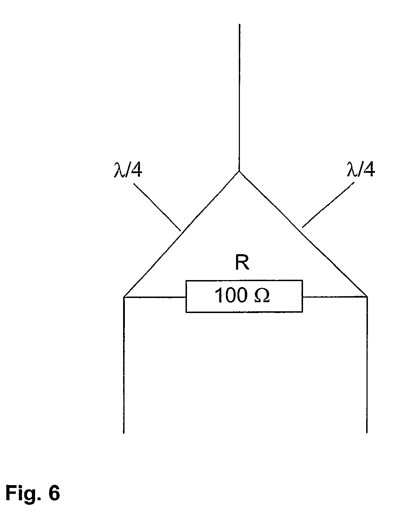

Die in den Fig. 1 und 2 für den Betrieb von zwei Mobilfunkgeräten 1, 1' dargestellte erfindungsgemäße Schaltungsanordnung kann unter Beibehaltung des grundsätzlichen Prinzips auch für den Betrieb von mehr als zwei Mobilfunkgeräten 1, 1', 1", 1''' modifiziert werden. Durch die Fig. 3 wird andeutungsweise die Möglichkeit einer Modifizierung der erfindungsgemäßen Schaltungsanordnung im Hinblick auf eine Verwendung für den Betrieb von mehr als zwei Mobilfunkgeräten veranschaulicht. Wie in den Ansprüchen und bei der Darstellung der erfindungsgemäßen Lösung angegeben, werden die Sendezweige der Compenser 3,3',3",3''' mittels eines oder mehrerer passiver Combiner zusammengeführt. Die Darstellung der Fig. 3 bezieht sich daher auf einen Ausschnitt der Schaltungsanordnung nach der Fig. 2, genauer gesagt auf deren Auslegung im Bereich der Combiner 9, 9a, 9b. Sie betrifft eine Ausgestaltung der erfindungsgemäßen Schaltungsanordnung für den Betrieb von maximal vier Mobilfunkgeräten 1, 1', 1", 1''' in einer bevorzugten Variante. Gemäß dieser Ausgestaltung werden die Sendezweige der Compenser jeweils paarweise zusammengeführt. Dies geschieht durch die Kaskadierung mehrerer passiver Combiner 9, 9a, 9b in mehreren Ebenen. Hierdurch wird klar, dass sich mit jeder Verdoppelung der maximal zu betreibenden Mobilfunkgeräte 1, 1', 1", 1''' gemäß dieser Variante eine weitere Ebene von Combinern erforderlich macht und die Anzahl der Combiner selbst entsprechend steigt. Gleichzeitig wird erkennbar, dass diese vorgestellte Ausführungsvariante im Bezug auf die maximal zu betreibende Anzahl von Mobilfunkgeräten 1', 1", 1''' zu einer der Potenzreihe der 2 entsprechenden Staffelung führt. Das heißt gleichzeitig, dass der gewünschte Betrieb von beispielsweise 6 Mobilfunkgeräten eine Ausführungsvariante der erfindungsgemäßen Schaltungsanordnung erfordert, mittels welcher maximal 8 Mobilfunkgeräte betrieben werden können. Dabei entspricht die Anzahl der erforderlichen Kaskaden I, II von passiven Combinern 9, 9a, 9b der jeweiligen Potenz der 2. Das heißt, der Betrieb von zwei, also 2¹ Mobilfunkgeräten erfordert einen passiven Combiner pro Frequenzzweig, der von maximal 4 Mobilfunkgeräte hingegen 2 Kaskaden mit insgesamt 3 passiven Combinern usw. In diesem Kontext ist das Blockschaltbild gemäß Fig. 1 in der Fig. 4 nochmals für eine Ausführungsform der Schaltungsanordnung für den Betreib von vier Mobilfunkgeräten 1, 1', 1", 1''' dargestellt.
Wie bereits erwähnt, steigt mit steigender Anzahl der zu betreibenden Mobilfunkgeräte 1, 1" auch die erforderliche Sendeleistung der Leistungsverstärker in den Sendezweigen 5, 5', 6, 6' der Compenser 3, 3'. Dies hängt mit der steigenden Anzahl der erforderlichen Combiner 9, 9a, 9b, 11 und der sich dadurch erhöhenden Dämpfung in diesem Schaltungsteil zusammen. Im Hinblick auf eine Dämpfung von angenommen mindestens 3 dB pro Combinerstufe wird daher für die Zusammenschaltung zweier Compenser 3, 3' an den Ausgängen ihrer Leistungsverstärker im GSM 900-Band eine Leistung von 4 W und GSM 1800-Band eine Leistung von 2 W benötigt. Folglich steigt die erforderliche Leistung für eine maximale Anzahl von 4 Mobilfunkgeräten 1, 1', 1", 1''' auf 8 W im GSM 900-Band bzw. 4 W im GSM 1800-Band. Gemäß einer bevorzugten Ausführungsform der Erfindung mit einer modularen Ausbildung ihrer Komponenten werden zur Bereitstellung dieser Verstärkerleistung Standardmodule mit einer Ausgangsleistung von 2 W verwendet. Um die gegebenenfalls erforderliche höhere Leistung von 4 W, 8 W oder gar 16 W zu erreichen, wird diesen Überlegungen folgend, eine entsprechende Zahl dieser Standardmodule zusammengeschaltet. Dies geschieht mittels so genannter 90° Hybride 27, 28. Entsprechendes ist durch die Fig. 5 veranschaulicht, welche einen Sendezweig 5 mit einem aus Grundmodulen bestehenden Leistungsverstärker darstellt.
Im Hinblick auf die mehrfach erwähnte sternförmige Verschaltung von λ/4-Leitungen soll diese aus dem Stand der Technik bekannte Vorgehensweise nochmals durch die Fig. 6 verdeutlicht werden. Danach werden beispielsweise zwei Sendezweige dadurch zusammengeführt, dass diese über zwei λ/4-Leitungen zusammengeführt und über einen Widerstand R von beispielsweise 100 Ohm miteinander verbunden werden. Dabei wird über den Widerstand zwischen beiden Zweigen die direkte Welle übertragen und über die beiden phasenverschiebend wirkenden λ/4-Leitungen eine um 180° dazu gedrehte Welle. Dies führt jeweils an den Anschlusspunkten der Sendezweige zu einer Auslöschung der Welle und somit zu einer Isolation beider Zweige gegeneinander, so dass gegebenenfalls von einem Sendezweig auf den anderen übersprechende Signale mit etwa 30 dB gedämpft werden. Die bestehenden Unzulänglichkeiten dieser rein passiv wirkenden Anordnung wurden bereits erläutert und werden durch die erfindungsgemäße Schaltungsanordnung überwunden.

### List der verwendeten Bezugszeichen

- 1,1',1",1''': Mobilfunkgerät (Handy)
- 2: Antenne
- 3, 3', 3", 3''': Kompensationseinheit (Compenser)
- 4: Zusammenschaltungseinheit
- 5, 5': Sendezweig mit Leistungsverstärker
- 6, 6': Sendezweig mit Leistungsverstärker
- 7, 7': Empfangszweig mit Empfangsverstärker
- 8, 8': Empfangszweig mit Empfangsverstärker
- 9, 9a, 9b: passiver Kombinierer (Combiner)
- 10: Splitter
- 11: passiver Kombinierer (Combiner)
- 12: Splitter
- 13, 14: Duplexweiche
- 15, 15': Isolator
- 16, 16': Isolator
- 17, 18: Verstärker
- 19, 19': HF-Umschalter
- 20, 20': HF-Umschalter
- 21, 21': Detektorschaltung
- 22, 22': Detektorschaltung
- 23, 23': Diplexer
- 24: Frequenzbandweiche
- 25: Oberflächenwellenfilter
- 26: ESD-Schutzeinheit
- 27, 28: 90° Hybrid

## Patentansprüche

1. Schaltungsanordnung zum gleichzeitigen Betrieb mehrerer Mobilfunkgeräte (1, 1', 1 ", 1''') an einer gemeinsamen, sowohl dem Empfang eingehender, als auch der Abstrahlung gesendeter Signale dienenden Antenne (2),
bei welcher zwischen der Antenne (2) und jedem Mobilfunkgerät (1, 1', 1", 1''') jeweils eine Kompensationseinheit (3, 3', 3", 3''') zum Kompensieren der in einem die Antenne (2) mit dem entsprechenden Mobilfunkgerät (1, 1', 1'', 1 "') verbindenden HF-Kabel auftretenden Dämpfung angeordnet ist,
welche über mindestens einen Sendezweig (5, 5', 6, 6') mit einem Leistungsverstärker und über mindestens einen Empfangszweig (7, 7', 8, 8') mit einem Empfangsverstärker verfügt, wobei diese abhängig davon, ob das Mobilfunkgerät (1, 1', 1", 1''') Signale empfängt oder sendet, geräteseitig mittels eines von einer Selektionsschaltung oder einer ein Sendesignal des betreffenden Mobilfunkgerätes (1, 1', 1'', 1 "') detektierenden Detektorschaltung (21, 21', 22; 22') geschalteten Duplexers oder HF-Umschalters (19, 19', 20, 20') wechselweise in den Signalweg geschaltet werden,
wobei antennenseitig alle Sende- und Empfangszweige (5, 5', 6, 6', 7, 7', 8, 8') der Kompensationseinheiten (3, 3', 3'', 3''') über eine Zusammenschaltungseinheit (4) mit der Antenne (2) verbunden sind, in der, in Signalflussrichtung betrachtet, alle einem Frequenzband zuzuordnenden an den Ausgängen von Sendeverstärkern in den Sendezweigen (5, 5', 6, 6') der Kompensationseinheiten (3, 3', 3", 3''') anstehenden Sendesignale über eine oder mehrere passive Kombinierer (9, 9a, 9b 11) auf eine Duplexweiche (13, 14) zusammengeführt sowie von dieser auf die Antenne (2) geführt werden und dass die an der Antenne (2) eingehenden Empfangssignale, welche den hinsichtlich des Frequenzbandes zugehörigen Empfangszweigen (7, 7', 8, 8') der Kompensationseinheiten (3, 3', 3", 3''') zuzuführen sind, über die Duplexweiche (13, 14) und, durch diese vom Signalweg der Sendesignale getrennt, über einen Verstärker (17, 18) und einen Splitter (10, 12) auf die Eingänge der Empfangsverstärker in den Empfangszweigen (7, 7', 8, 8') geführt werden, wobei jeweils zwischen dem Ausgang eines Senderverstärkers und einem mit ihm unmittelbar verbundenen passiven Kombinierers (9, 9a, 9b, 11) ein Sperrelement, nämlich ein nur für die Sendesignale des entsprechenden Sendeverstärkers passierbarer Isolator (15, 15', 16, 16') angeordnet und die Ausgangsleistung aller Sendeverstärker der Kompensationseinheiten (3, 3', 3", 3"') entsprechend der an den passiven Kombinierern (9, 9a, 9b, 11) auftretenden Dämpfung des Sendesignals erhöht ist und wobei die an dem das Empfangssignal passiv auf die Empfangsverstärker der Kompensationseinheiten (3, 3', 3", 3''') verteilenden Splitter (10, 12) auftretende Dämpfung durch den ihm vorgeschalteten Verstärker (17, 18) der Zusammenschaltungseinheit (4) kompensiert wird.

2. Schaltungsanordnung nach Anspruch 1, **dadurch gekennzeichnet, dass** zwischen der Duplexweiche (13, 14) und der Antenne weitere Filtereinheiten (24, 25) angeordnet sind.

3. Schaltungsanordnung nach Anspruch 2, **dadurch gekennzeichnet, dass** die Kompensationseinheiten (3, 3', 3", 3''') mehrere über einen Diplexer (23, 23') verschaltete Sendezweige (5, 6, 5', 6') und Empfangszweige (7, 8, 7', 8') zur Verstärkung von Signalen unterschiedlicher Frequenzbänder aufweisen, wobei die von ihnen verstärkten Sendesignale und die ihnen zugeführten Empfangssignale entsprechend ihrem Frequenzband über unterschiedliche Frequenzzweige der Zusammenschaltungseinheit (4) geführt werden und es sich bei mindestens einer der weiteren Filtereinheiten um eine Frequenzbandweiche (24) handelt, an welcher über unterschiedliche Frequenzzweige der Zusammenschaltungseinheit (4) geführte Sendesignale zusammengeführt bzw. Empfangssignale voneinander getrennt werden, wobei jeder Frequenzzweig der Zusammenschaltungseinheit (4) zumindest aus einem oder mehreren passiven Kombinierern (9, 9a, 9b, 11), einer Duplexweiche (13, 14), einem Splitter (10, 12) sowie einem dem Splitter vorgeschalteten Verstärker (17, 18) besteht.

4. Schaltungsanordnung nach Anspruch 3, **dadurch gekennzeichnet, dass** die Zusammenschaltungseinheit (4) zwei Frequenzzweige aufweist.

5. Schaltungsanordnung nach Anspruch 4, **dadurch gekennzeichnet, dass** diese für den Betrieb mehrerer wahlweise im GSM 900-Netz und/oder im GSM 1800-Netz arbeitender Mobilfunkgeräte (1, 1', 1", 1''') ausgelegt ist.

6. Schaltungsanordnung nach Anspruch 1 oder 3, **dadurch gekennzeichnet, dass** die Schaltungsanordnung und gegebenenfalls deren Einheiten modular aufgebaut sind.

7. Schaltungsanordnung nach Anspruch 6, **dadurch gekennzeichnet, dass** die Isolatoren (15, 15', 16, 16') im Hinblick auf einen modularen Aufbau der Schaltungsanordnung Bestandteile der Zusammenschaltungseinheit (4) sind, wobei jedem Eingang eines passiven Kombinierers (9,9a, 9b, 11) für das Sendesignal ein Isolator (15, 15', 16, 16') vorgeschaltet ist.

8. Schaltungsanordnung nach Anspruch 6, **dadurch gekennzeichnet, dass** die Leistungsverstärker der Kompensationseinheiten (3, 3', 3", 3''') durch Verstärkergrundmodule realisiert werden, die gegebenenfalls zum Erhalt der für die Kompensation der Dämpfung im HF-Kabel und den passiven Kombinierern (9, 9a, 9b, 11) erforderlichen Ausgangsleistung jeweils innerhalb einer Kompensationseinheit (3, 3', 3", 3''') und bezogen auf den Sendezweig (5, 6, 5', 6') für ein Frequenzband an den Aus- und Eingängen durch 90°-Hybride (27, 28) zusammengeschaltet sind.

9. Schaltungsanordnung nach Anspruch 1 oder 3, **dadurch gekennzeichnet, dass** diese für den gleichzeitigen Betrieb einer sich als Kombinationspotenz von 2 ergebenden, einem Kombinationsmaximum entsprechenden Anzahl von Mobilfunkgeräten (1, 1', 1", 1''') ausgelegt ist, wobei jeder Frequenzzweig der Zusammenschaltungseinheit (4) in dem Signalweg für die Sendesignale eine gegenüber dem Kombinationsmaximum um 1 verminderte Anzahl von passiven Kombinierern (9, 9a, 9b, 11) aufweist, die in einer der Kombinationspotenz entsprechenden Zahl von Kaskadenstufen (I, II) miteinander verschaltet sind, während der Splitter (10, 12) des zugehörigen Signalweges für die Empfangssignale diesen in eine dem Kombinationsmaximum entsprechende Anzahl von Signalwegen aufteilt und die Zahl der Kompensationseinheiten (3, 3', 3", 3''') dem Kombinationsmaximum entspricht und wobei je Kaskadenstufe (I, II) die Ausgangsleistung jedes Leistungsverstärkers einer Kompensationseinheit (3, 3', 3", 3''') bezogen auf die Leistung eines über den jeweiligen Leistungsverstärker geführten Sendesignals eines Mobilfunkgerätes (1, 1', 1", 1''') verdoppelt ist.

10. Schaltungsanordnung nach Anspruch 1 oder 3, **dadurch gekennzeichnet, dass** zwischen einer Duplexweiche (13, 14) bzw. einem Diplexer (24) der Zusammenschaltungseinheit (4) und der Antenne (2) ein Oberwellenfilter (25) angeordnet ist.

11. Schaltungsanordnung nach Anspruch 1 oder 3, **dadurch gekennzeichnet, dass** zwischen einer Duplexweiche (13, 14) bzw. einem Diplexer (24) der Zusammenschaltungseinheit (4) und der Antenne (2) eine die übrigen Schaltungsteile vor elektrostatischen Entladungen schützende ESD-Schutzeinheit (26) angeordnet ist.

12. Schaltungsanordnung nach Anspruch 10 oder 11, **dadurch gekennzeichnet, dass** ein Oberwellenfilter (25) und/oder eine ESD-Schutzeinheit (26) im Hinblick auf einen modularen Aufbau der Schaltungsanordnung antennenseitig angeordnete Bestandteile der Zusammenschaltungseinheit (4) darstellen.

## Claims

1. Circuit arrangement for simultaneously operating several mobile radio devices (1, 1', 1", 1''') on a common antenna (2) used both for receiving incoming and emitting outgoing signals,
in which a respective compensation unit (3, 3', 3", 3"') for compensating the attenuation occurring in a HF-cable linking the antenna (2) to the corresponding mobile radio device (1, 1', 1", 1"') is disposed between the antenna (2) and each mobile radio device (1, 1', 1", 1'''),
which has at least one transmitting branch (5, 5', 6, 6') with a power amplifier and at least one receiving branch (7, 7', 8, 8') with a reception amplifier, and the latter are alternately connected into the signal path at the device end by means of a duplexer or HF switch (19, 19', 20, 20') connected to a selection circuit or a detector circuit (21, 21', 22; 22') detecting a transmission signal of the relevant mobile radio device (1, 1', 1", 1''') therefore depending on whether the mobile radio device (1, 1', 1", 1"') is receiving or transmitting signals,
whereby all the transmitting and receiving branches (5, 5', 6, 6', 7, 7', 8, 8') of the compensation units (3, 3', 3", 3"') are connected to the antenna (2) at the antenna end by means of an interconnection unit (4) in which all the transmission signals to be assigned to a frequency band, as viewed in the signal flow direction, at the outputs of transmission amplifiers in the transmission branches (5, 5', 6, 6') of the compensation units (3, 3', 3", 3"') are grouped by means of one or more passive combiners (9, 9a, 9b, 11) to a duplex switch (13, 14) and directed by it to the antenna (2), and the incoming reception signals at the antenna (2) to be directed to the associated reception branches (7, 7', 8, 8') of the compensation units (3, 3', 3", 3"') on the basis of frequency band are directed via the duplex switch (13, 14) and separated from the signal path of the transmission signals by the latter and directed via an amplifier (17, 18) and a splitter (10, 12) to the inputs of the reception amplifiers in the reception branches (7, 7', 8, 8'), whereby a blocking element is disposed respectively between the output of a transmission amplifier and a passive combiner (9, 9a, 9b, 11) directly connected to it, namely an isolator (15, 15', 16, 16') through which only the transmission signals of the co-operating transmission amplifier can pass, and the output power of all the transmission amplifiers of the compensation units (3, 3', 3", 3"') is increased as a function of the attenuation of the transmission signal occurring at the passive combiners (9, 9a, 9b, 11), and the attenuation occurring at the splitter (10, 12) passively distributing the reception signal to the reception amplifiers of the compensation units (3, 3', 3", 3"') is compensated by the amplifiers (17, 18) of the interconnection unit (4) connected upstream of it.

2. Circuit arrangement as claimed in claim 1, **characterised in that** other filter units (24, 25) are provided between the duplex switch (13, 14) and the antenna.

3. Circuit arrangement as claimed in claim 2, **characterised in that** the compensation units (3, 3', 3", 3"') have several transmission branches (5, 6, 5', 6') and reception branches (7, 8, 7', 8') connected via a diplexer (23, 23') for amplifying signals of different frequency bands, whereby the transmission signals amplified by them and the reception signals directed to them are directed to them on the basis of their frequency band via different frequency branches of the interconnection unit (4), and at least one of the other filter units acts as a frequency band switch (24) at which transmission signals directed to it via different frequency branches of the interconnection unit (4) are grouped and reception signals separated from one another, whereby every frequency branch of the interconnection unit (4) comprises at least one or more passive combiners (9, 9a, 9b, 11), a duplex switch (13, 14), a splitter (10, 12) and an amplifier (17, 18) connected upstream of the splitter.

4. Circuit arrangement as claimed in claim 3, **characterised in that** the interconnection unit (4) has two frequency branches.

5. Circuit arrangement as claimed in claim 4, **characterised in that** it is designed for operating several mobile radio devices (1, 1', 1", 1"') which operate selectively in the GSM 900 network and/or in the GSM 1800 network.

6. Circuit arrangement as claimed in claim 1 or 3, **characterised in that** the circuit arrangement and optionally its units are of a modular design.

7. Circuit arrangement as claimed in claim 6, **characterised in that** the isolators (15, 15', 16, 16') are constituent elements of the interconnection unit (4) as regards the modular design of the circuit arrangement whereby an isolator (15, 15', 16, 16') is connected upstream of every input of a passive combiner (9, 9a, 9b, 11) for the transmission signal.

8. Circuit arrangement as claimed in claim 6, **characterised in that** the power amplifiers of the compensation units (3, 3', 3", 3"') are configured as amplification base modules which may be interconnected by 90° hybrids (27, 28) at the outputs and inputs for receiving the output power needed for compensating attenuation in the HF cable and the passive combiners (9, 9a, 9b, 11) respectively inside a compensation unit (3, 3', 3", 3"') and by reference to the transmission branch (5, 6, 5', 6') for a frequency band.

9. Circuit arrangement as claimed in claim 1 or 3, **characterised in that** it is designed for simultaneously operating a number of mobile radio devices (1, 1', 1", 1"') corresponding to a combination maximum resulting from a combination power of 2, whereby every frequency branch of the interconnecting unit (4) has a reduced number of passive combiners (9, 9a, 9b, 11) which is the combination maximum minus 1 in the signal path for the transmission signals, which are connected to one another in a number of cascade stages (I, II) corresponding to the combination power, whilst the splitters (10, 12) of the co-operating signal path for the reception signals split the latter into a number of signal paths corresponding to the combination maximum and the number of compensation units (3, 3', 3", 3"') corresponds to the combination maximum, whereby the output power of every power amplifier of a compensation unit (3, 3', 3", 3"') per cascade stage (I, II) is twice the power of a transmission signal of a mobile radio device (1, 1', 1", 1"') directed via the respective power amplifier.

10. Circuit arrangement as claimed in claim 1 or 3, **characterised in that** a harmonic filter (25) is disposed between a duplex switch (13, 14) alternatively a diplexer (24) of the interconnection unit (4) and the antenna (2).

11. Circuit arrangement as claimed in claim 1 or 3, **characterised in that** an ESD protective unit (26) protecting the other circuit components against electrostatic discharges is disposed between a duplex switch (13, 14) alternatively a diplexer (24) of the interconnection unit (4) and the antenna (2).

12. Circuit arrangement as claimed in claim 10 or 11, **characterised in that** a harmonic filter (25) and/or an ESD protective unit (26) form antenna-end constituent parts of the interconnection unit (4) as regards the modular design of the circuit arrangement.

## Revendications

1. Arrangement de circuit destiné à faire fonctionner simultanément plusieurs appareils de radiocommunication mobiles (1, 1', 1'', 1''') sur une antenne (2) commune servant aussi bien à la réception des signaux entrants qu'à la diffusion des signaux d'émission,
dans lequel une unité de compensation (3, 3', 3'', 3''') est à chaque fois disposée entre l'antenne (2) et chacun des appareils de radiocommunication mobiles (1, 1', 1'', 1''') pour compenser l'atténuation qui se produit dans un câble HF qui relie l'antenne (2) à l'appareil de radiocommunication mobile (1, 1', 1'', 1''') correspondant,
laquelle dispose d'au moins une branche d'émission (5, 5', 6, 6') comprenant un amplificateur de puissance et d'au moins une branche de réception (7, 7', 8, 8') comprenant un amplificateur de réception, celles-ci étant commutées en alternance dans le trajet du signal du côté de l'appareil au moyen d'un duplexeur ou d'un inverseur HF (19, 19', 20, 20') commuté par un circuit de sélection ou par un circuit détecteur (21, 21', 22, 22') détectant un signal d'émission de l'appareil de radiocommunication mobile (1, 1', 1'', 1''') concerné, suivant que l'appareil de radiocommunication mobile (1, 1', 1'', 1''') reçoive ou émette des signaux,
toutes les branches d'émission et de réception (5, 5', 6, 6', 7', 7', 8', 8') des unités de compensation (3, 3' , 3'', 3''') étant reliées à l'antenne (2) du côté de l'antenne par le biais d'une unité d'interconnexion (4) dans laquelle, vu dans le sens de circulation du signal, tous les signaux d'émission affectés à une bande de fréquence présents sur les sorties des amplificateurs d'émission dans les branches d'émission (5, 5', 6, 6') des unités de compensation (3, 3', 3'', 3''') étant regroupés sur un répartiteur duplex (13, 14) par le biais d'un ou plusieurs combinateurs passifs (9, 9a, 9b, 11) puis acheminés de celui-ci vers l'antenne (2) et les signaux de réception entrant au niveau de l'antenne (2), qui doivent être acheminés aux branches de réception (7, 7', 8, 8') des unités de compensation (3, 3', 3", 3"') correspondantes du point de vue de la bande de fréquence, étant acheminés par le biais du répartiteur duplex (13, 14) et, séparés par celui-ci du trajet des signaux d'émission, par le biais d'un amplificateur (17, 18) et d'un séparateur (10, 12) aux entrées des amplificateurs de réception dans les branches de réception (7, 7', 8, 8'), un élément de blocage, à savoir un isolateur (15, 15', 16, 16') laissant uniquement passer les signaux d'émission de l'amplificateur d'émission correspondant, étant à chaque fois disposé entre la sortie d'un amplificateur d'émission et un combinateur passif (9, 9a, 9b, 11) directement relié à celle-ci, et la puissance de sortie de tous les amplificateurs d'émission des unités de compensation (3, 3', 3'', 3''') étant augmentée en fonction de l'atténuation du signal d'émission qui se produit au niveau des combinateurs passifs (9, 9a, 9b, 11) et l'atténuation qui se produit au niveau du séparateur (10, 12) distribuant passivement le signal d'entrée sur les amplificateurs de réception des unités de compensation (3, 3', 3", 3''') étant compensée par l'amplificateur (17, 18) de l'unité d'interconnexion (4) qui est branché en amont de celui-ci.

2. Arrangement de circuit selon la revendication 1, **caractérisé en ce que** d'autres unités de filtrage (24, 25) sont disposées entre le répartiteur duplex (13, 14) et l'antenne.

3. Arrangement de circuit selon la revendication 2, **caractérisé en ce que** les unités de compensation (3, 3', 3", 3"') présentent plusieurs branches d'émission (5, 6, 5', 6') et branches de réception (7, 8, 7', 8') commutées par le biais d'un diplexeur (23, 23') pour amplifier les signaux de différentes bandes de fréquence, les signaux d'émission amplifiés par celles-ci et les signaux de réception qui sont acheminés à celles-ci étant amenés à l'unité d'interconnexion (4) par le biais de différentes branches de fréquence en fonction de leur bande de fréquence et au moins l'une des unités de filtrage supplémentaires étant un séparateur de bande de fréquence (24) au niveau duquel les signaux d'émission amenés sont regroupés et les signaux de réception sont séparés les uns des autres par le biais des différentes branches de fréquence de l'unité d'interconnexion (4), chaque branche de fréquence de l'unité d'interconnexion (4) se composant d'au moins un ou plusieurs combinateurs passifs (9, 9a, 9b, 11), d'un répartiteur duplex (13, 14), d'un séparateur (10, 12) ainsi que d'un amplificateur (17, 18) branché en amont du séparateur.

4. Arrangement de circuit selon la revendication 3, **caractérisé en ce que** l'unité d'interconnexion (4) présente deux bandes de fréquence.

5. Arrangement de circuit selon la revendication 4, **caractérisé en ce que** celui-ci est conçu pour le fonctionnement de plusieurs appareils de radiocommunication mobiles (1, 1', 1'', 1''') fonctionnant au choix dans le réseau GSM 900 et/ou dans le réseau GSM 1800.

6. Arrangement de circuit selon la revendication 1 ou 3, **caractérisé en ce que** l'arrangement de circuit et éventuellement ses unités sont construits sous forme modulaire.

7. Arrangement de circuit selon la revendication 6, **caractérisé en ce que** les isolateurs (15, 15', 16, 16'), dans le cadre de la construction modulaire de l'arrangement de circuit, sont des composants de l'unité d'interconnexion (4), un isolateur (15, 15', 16, 16') étant branché avant chaque entrée d'un combinateur passif (9, 9a, 9b, 11) pour le signal d'émission.

8. Arrangement de circuit selon la revendication 6, **caractérisé en ce que** les amplificateurs de puissance des unités de compensation (3, 3', 3", 3"') sont réalisés par des modules amplificateurs de base qui sont, le cas échéant, interconnectés à chaque fois à l'intérieur d'une unité de compensation (3, 3', 3", 3''') et par rapport à la branche d'émission (5, 6, 5', 6') pour une bande de fréquence au niveau des entrées et des sorties par des coupleurs hybrides à 90° (27, 28) afin d'obtenir la puissance de sortie nécessaire pour la compensation de l'atténuation dans le câble HF et dans les combinateurs passifs (9, 9a, 9b, 11).

9. Arrangement de circuit selon la revendication 1 ou 3, **caractérisé en ce que** celui-ci est conçu pour le fonctionnement simultané d'un certain nombre d'appareils de radiocommunication mobiles (1, 1', 1'', 1''') avec une puissance combinatoire de 2 et correspondant à un maximum combinable, chaque branche de fréquence de l'unité d'interconnexion (4) présentant dans le trajet de signal pour les signaux d'émission un nombre de combinateurs passifs (9, 9a, 9b, 11) inférieur de 1 au maximum combinable, lesquels sont connectés entre eux en un nombre d'étages en cascade (I, II) correspondant à la puissance combinatoire, alors que le séparateur (10, 12) du trajet de signal correspondant pour les signaux de réception divise ceux-ci en un nombre de trajets de signal correspondant au maximum combinable et le nombre d'unités de compensation (3, 3', 3", 3''') correspondant au maximum combinable et, pour chaque étage en cascade (I, II), la puissance de sortie de chaque amplificateur de puissance d'une unité de compensation (3, 3', 3", 3''') étant doublée par rapport à la puissance d'un signal d'émission d'un appareil de radiocommunication mobile (1, 1', 1", 1''') acheminé par le biais de l'amplificateur de puissance correspondant.

10. Arrangement de circuit selon la revendication 1 ou 3, **caractérisé en ce qu'**un filtre d'harmoniques (25) est disposé entre un répartiteur duplex (13, 14) ou un séparateur de bande de fréquence (24) de l'unité d'interconnexion (4) et l'antenne (2).

11. Arrangement de circuit selon la revendication 1 ou 3, **caractérisé en ce qu'**une unité de protection ESD (26) protégeant les autres parties du circuit contre les décharges électrostatiques est disposée entre un répartiteur duplex (13, 14) ou un séparateur de bande de fréquence (24) de l'unité d'interconnexion (4) et l'antenne (2).

12. Arrangement de circuit selon la revendication 10 ou 11, **caractérisé en ce qu'**un filtre d'harmoniques (25) et/ou une unité de protection ESD (26) représentent les composants de l'unité d'interconnexion (4) qui sont disposés du côté de l'antenne dans le cadre d'une construction modulaire de l'arrangement de circuit.
